# EUROPEAN PATENT APPLICATION

(11) **EP 4 745 871 A1**
(43) Date of publication of application: **20.05.2026**
(21) Application number: 23956178.0
(22) Date of filing: 18.10.2023
(51) Int. Cl.: G06Q 50/10, G06F 16/332, G06F 16/33

(54) **SYSTEM FOR PROVIDING PERSONALIZED INFORMATION USING LARGE LANGUAGE MODEL AND METHOD FOR IMPLEMENTING SAME**

(71) Applicant: LG Electronics Inc., Yeongdeungpo-gu Seoul 07336 (KR)
(72) Inventor: KIM, Sang Won, Seoul 08592 (KR); LEE, Eunah, Seoul 08592 (KR); KIM, Joon Hyung, Seoul 08592 (KR)
(74) Representative: Schott, Jakob Valentin
(86) International application number: PCT/KR2023/016203
(87) International publication number: WO 2025/084456

(57) **Abstract**

The present invention relates to a technology relating to a system for providing personalized information using a large language model and a method for implementing same. The method according to an embodiment of the present invention comprises the steps of: receiving, by a communication unit of a home appliance control device, a first question message from a client device or a first home appliance; transmitting, by the communication unit, one of the first question message and a second question message obtained by preprocessing the first question message, to a large language model (LLM) server, and receiving a first answer message; and transmitting, by the communication unit, one of the first answer message and a second answer message obtained by post-processing the first answer message, to the client device or the first home appliance, wherein the preprocessing or post-processing is performed by a control unit of the home appliance control device.

## Description

### [Technical Field]

The present invention relates to a system for providing personalized information using a large language model and a method for implementing the same.

### [Background Art]

Recently, various large language models have been developed and are increasingly being used in practice, leading to increasing attempts to apply the large language models to various fields. However, the large language models aggregate and provide vast amounts of existing information, and thus can provide information with low relevance to an individual's situation.

In particular, when users require specific information in their daily life, personalized information of the corresponding user can determine the quality of the information provided by the large language model. Accordingly, there is a need for a method for providing personalized services while using the advantages of large language models.

### [Disclosure]

### [Technical Problem]

The present specification is to solve the above problems and is directed to increasing the accuracy of questions and answers by applying personalized user information to large language models.

In addition, the present specification is directed to using various large language models while enhancing the security and confidentiality of personalized user information or data generated during the use of home appliances.

In addition, the present specification is directed to enhancing the convenience of use of a home appliance by including commands for controlling or setting a home appliance of a user in answers to the user's questions.

Objects of the present invention are not limited to the above-described object, and other objects and advantages of the present invention which are not mentioned can be understood by the following description and more clearly understood by embodiments of the present disclosure. In addition, it will be able to be easily seen that the objects and advantages of the present invention may be achieved by devices and combinations thereof that are described in the claims.

### [Technical Solution]

According to one embodiment of the present invention, there is provided a method of providing personalized information using a large language model (LLM), the method including receiving, by a communication unit of a home appliance control device, a first question message from a client device or a first home appliance, transmitting, by the communication unit, any one of a first question message or a second question message obtained by preprocessing the first question message to an LLM server and receiving a first answer message, and transmitting, by the communication unit, any one of the first answer message or a second answer message obtained by postprocessing the first answer message to the client device or the first home appliance, wherein the preprocessing or the postprocessing is performed by a control unit of the home appliance control device.

According to another embodiment of the present invention, there is provided a method of providing personalized information using a large language model (LLM), the method including receiving, by a communication unit of a home appliance control device, a first question message from a client device or a first home appliance, loading, by the control unit of the home appliance control device, preprocessing information corresponding to the first question message from a storage unit of the home appliance control device, preprocessing, by the control unit, the first question message using the preprocessing information and generating a second question message, transmitting, by the communication unit of the home appliance control device, the second question message to an LLM server and receiving a first answer message, and transmitting, by the communication unit, any one of the first answer message or a second answer message obtained by postprocessing the first answer message to the client device or the first home appliance.

According to still another embodiment of the present invention, there is provided a method of providing personalized information using a large language model (LLM), the method including receiving, by a communication unit of a home appliance control device, a first question message from a client device or a first home appliance, transmitting, by the communication unit, any one of a first question message or a second question message obtained by preprocessing the first question message to an LLM server and receiving a first answer message, loading, by a control unit, postprocessing information corresponding to a first answer message from a storage unit of the home appliance control device, postprocessing, by the control unit, the first answer message using the postprocessing information and generating a second answer message, and transmitting, by the communication unit, the second answer message to the client device or the first home appliance.

According to one embodiment of the present invention, there is provided a home appliance control server providing personalized information using a large language model (LLM), including a communication unit configured to communicate with a client device, one or more home appliances, or an LLM server, a control unit configured to process information received by the communication unit, and a storage unit configured to store information, wherein, when the communication unit receives a first question message from the client device or a first home appliance, the control unit loads preprocessing information corresponding to the first question message from the storage unit, preprocesses the first question message using the preprocessing information, and generates a second question message, and the communication unit transmits the second question message to the LLM server, receives a first answer message, and transmits any one of the first answer message or a second answer message obtained by postprocessing the first answer message to the client device or the first home appliance.

According to another embodiment of the present invention, there is provided a home appliance control server providing personalized information using a large language model (LLM), including a communication unit configured to communicate with a client device, one or more home appliances, or an LLM server, a control unit configured to process information received by the communication unit, and a storage unit configured to store information, wherein the communication unit receives a first question message from the client device or a first home appliance, transmits any one of the first question message or a second question message obtained by preprocessing the first question message to the LLM server, and receives a first answer message, the control unit loads postprocessing information corresponding to the first answer message from the storage unit, postprocesses the first answer message using the postprocessing information, and generates a second answer message, and the communication unit transmits the second answer message to the client device or the first home appliance.

### [Technical Solution]

According to the present invention, the accuracy of questions or answers can be increased by employing personalized user information in using the large language model.

According to the present invention, various large language models can be used while enhancing the security and confidentiality of the personalized user information or data generated during the use of home appliances.

According to the present invention, the user convenience in using home appliances can be improved by including commands for controlling or setting the home appliance in the answers to the user's questions.

Effects of the present invention are not limited to the above effects, and various effects of the present invention can be easily derived from the configuration of the present invention.

### [BRIEF DESCRIPTION OF THE DRAWINGS]

FIG. 1 is a view illustrating a configuration of the overall system according to one embodiment of the present invention.
FIG. 2 is a view illustrating components of a home appliance control server according to one embodiment of the present invention.
FIG. 3 is a view illustrating a process of performing preprocessing or postprocessing according to one embodiment of the present invention.
FIG. 4 is a view illustrating the preprocessing process according to one embodiment of the present invention in more detail.
FIG. 5 is a view illustrating a process of recommending possible dishes using food materials stored in a refrigerator according to one embodiment of the present invention.
FIG. 6 is a view illustrating a process of modifying a question message and an answer message by reflecting information on food materials stored in the refrigerator and cooking apparatuses according to one embodiment of the present invention.
FIG. 7 is a view illustrating a process of modifying a question message and an answer message by reflecting a previous cooking history or interest information of a user according to one embodiment of the present invention.
FIG. 8 is a view illustrating a process of controlling the use of a home appliance according to one embodiment of the present invention.
FIG. 9 is a view illustrating a process of preprocessing a user's question regarding the abnormal operation of a home appliance and a process of postprocessing the result according to one embodiment of the present invention.
FIG. 10 is an interface illustrating the result of including a diagnosis result in an answer according to one embodiment of the present invention.

### [DETAILED DESCRIPTION OF THE INVENTION]

Hereinafter, embodiments of the present invention will be described in detail with reference to the accompanying drawings so that those skilled in the art to which the present invention pertains can easily carry out the present invention. The present invention may be implemented in various different forms and is not limited to the embodiments described herein.

To clearly describe the present invention, parts not related to the description have been omitted, and the same or similar components are denoted by the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present disclosure, when it is determined that a detailed description of a related known configuration or function may obscure the gist of the present disclosure, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

Recently, research and industrial applications of artificial intelligence models that process natural language input and produce results based on a large language model (LLM) are increasing. Since the LLM processes information input by users in natural language and provides corresponding results, when the users input questions appropriately for LLM information processing, the accuracy of the results increases.

The LLM may process information using existing accumulated data but may not process information in response to individual situations of the users. This requires individual user information to be loaded into the LLM for learning, and the inclusion of all user information in the LLM in this way has limitations and also raises privacy concerns.

Accordingly, in the present specification, a system and method for performing preprocessing or postprocessing on the LLM using personalized user information, thereby generating highly accurate results will be described.

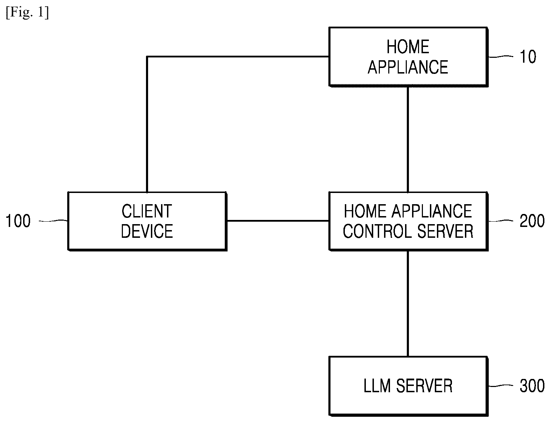

FIG. 1 is a view illustrating a configuration of the overall system according to one embodiment of the present invention. A plurality of home appliances 10 may be provided. In an embodiment, a client device 100 includes various devices of a user using the home appliance 10, such as a computer, a laptop, a tablet, a mobile device, etc. The user may input questions into the client device 100 in the format of text. The user may also input questions into the client device 100 by voice.

The client device 100 transmits the input questions to the home appliance control server 200. Directly or in collaboration with the LLM server 300, the home appliance control server 200 may calculate the results of the questions and transmit the calculated results to the client device 100, and the client device 100 may output the results in the format of voice or text.

The client device 100 may receive information generated by the home appliance 10 or transmit a predetermined control command to the home appliance 10, and during this process, the home appliance control server 200 may mediate the exchange of information and transmission of control commands between the client device 100 and the home appliance 10.

In addition, the home appliance control server 200 receives various information generated by the home appliance 10 and accumulates and stores the information. The accumulated and stored information is used by the home appliance control server 200 to check a current status of the home appliance 10. Later, the home appliance control server 200 may use the current status or previous history information of the home appliance 10 during the process of securing predetermined information from the LLM server 300.

When the client device 100 transmits a question message, the home appliance control server 200 performs a preprocessing process of adding the state information or history information of the home appliance 10 relevant to the user's question to the question message and transmits the preprocessed question message to the LLM server 300.

In addition, the appliance control server 200 performs a postprocessing process of adding state information, history information, manipulation information, and the like of the home appliance 10 relevant to the user's question to the answer message transmitted by the LLM server 300 and transmits the postprocessed answer message to the client device 100.

Meanwhile, the user may ask a question through the client device 100, but may also ask a question through the home appliance 10. For example, when the home appliance 10 has a predetermined voice recognition function, the user may input a question to the home appliance 10 by voice and check the result through a speaker of the home appliance 10.

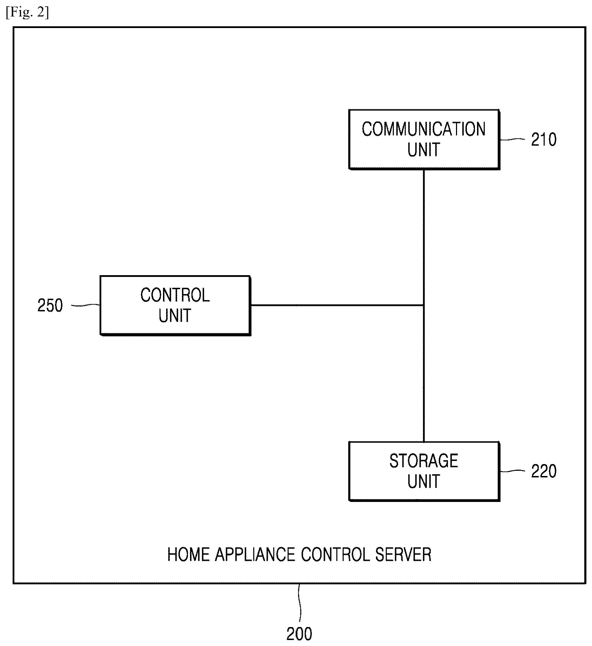

FIG. 2 is a view illustrating components of a home appliance control server according to one embodiment of the present invention. The home appliance control server 200 includes a communication unit 210, a control unit 250, and a storage unit 220.

The communication unit 210 transmits and receives information with the client device 100, the home appliance 10, and the LLM server 300. The storage unit 220 stores information transmitted by the client device 100 and the home appliance 10 in a database. The control unit 250 may use the information stored in the storage unit 220 to perform preprocessing on a question or postprocessing on an answer.

According to one embodiment, the communication unit 210 of the home appliance control device receives a first question message from the client device 100 or the home appliance 10.

The communication unit 210 transmits one of the first question message or a second question message obtained by preprocessing the first question message to the LLM server 300 and receives a first answer message.

The communication unit 210 transmits one of a first answer message or a second answer message obtained by postprocessing the first answer message to the client device 100 or the home appliance 10.

The control unit 250 preprocesses the first question message or postprocesses the first answer message. The storage unit 220 may temporarily store information transmitted by the client device 100, the home appliance 10, and the LLM server 300.

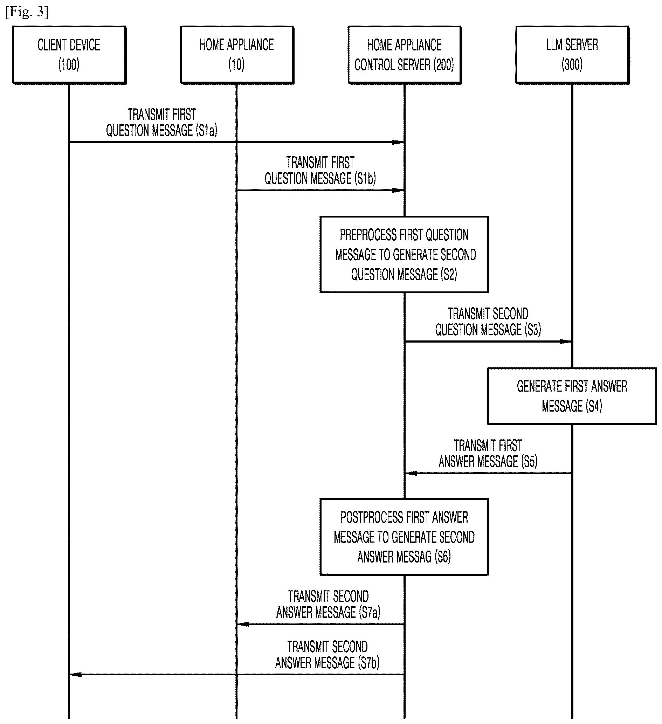

FIG. 3 is a view illustrating a process of performing preprocessing or postprocessing according to one embodiment of the present invention.

The example of FIG. 3 presents a process of preprocessing a question message or postprocessing an answer message to provide personalized information using an LLM.

The example of FIG. 3 relates to the operation of a method and system for providing personalized information using an LLM, and the communication unit 210 of the home appliance control device receives the first question message from the client device 100 or the home appliance 10.

In addition, the communication unit 210 transmits one of the first question message or the second question message obtained by preprocessing the first question message to the LLM server 300 and receives the first answer message.

In addition, the communication unit 210 transmits one of the first answer message or the second answer message obtained by postprocessing the first answer message to the client device 100 or the home appliance 10. In this case, as an example, the preprocessing or postprocessing is performed by the control unit 250 of the home appliance control device.

The user inputs a question by voice or text using the client device 100 or the home appliance 10. As a result of the input, the client device 100 or the home appliance 10 transmits the first question message (S1a, S1b). During this process, the client device 100 or the home appliance 10 may convert the question input by voice into text.

The first question message transmitted by the client device 100 or the home appliance 10 may include a text file or an audio file. In addition, the first question message may include history information of the client device 100 or the home appliance 10.

The history information includes the usage history, current and previous states, previous question history, answer history, and the like of the client device 100 or the home appliance 10. In addition, the first question message may include the type or detailed model name of the client device 100 or the home appliance 10, user identification information, etc.

The home appliance control server 200 receiving the first question message preprocesses the first question message to generate the second question message (S2). The home appliance control server 200 modifies the first question message using the history information or identification information included in the first question message or various information stored and managed by the home appliance control server 200 to generate the second question message.

For example, when the first question message is "What should I cook for dinner tonight?," the home appliance control server 200 may identify food materials stored in a refrigerator among the home appliances managed by the client device 100 and include the names of the corresponding food materials in the first question message. In this case, the home appliance control server 200 may generate a second question message with the added food materials (tofu, bean sprouts), such as "I have tofu and bean sprouts for dinner tonight; what should I cook?"

In addition, the home appliance control server 200 may generate the second question message obtained by preprocessing the first question message using information on the histories and current statuses of other home appliances managed by the client device 100 or related to the home appliance 10 providing the first question message.

In addition, the home appliance control server 200 transmits the second question message, which is the result of the preprocessing process, to the LLM server 300 (S3). The LLM server 300 generates the first answer message in response to the second question message (S4). In addition, the LLM server 300 transmits the first answer message to the home appliance control server 200 (S5).

The home appliance control server 200 postprocesses the first answer message to generate the second answer message (S6). The home appliance control server 200 modifies the first answer message using history information or identification information of the client device 100 or home appliance 10 that has transmitted the first question message or other related appliances, or various information stored and managed by the appliance control server 200 to generate the second answer message.

For example, in a case in which the first answer message is "I recommend a clear soup using tofu and bean sprouts. Please put tofu, bean sprouts, soy sauce, and water in a pot and boil them," the home appliance control server 200 may check an induction cooker among the home appliances managed by the client device 100 and include more detailed cooking instructions in the first answer message. In this case, the home appliance control server 200 may generate a second answer message in which detailed cooking instructions (boiling for 15 minutes on the induction cooker) are added, such as "I recommend a clear soup using tofu and bean sprouts. Please put tofu, bean sprouts, soy sauce, and water in a pot, place it on the induction cooker, and boil for 15 minutes."

The home appliance control server 200 transmits the second answer message to the client device 100 or home appliance 10 that has transmitted the first question message (S7a, S7b). The second answer message may include a text file or an audio file.

In FIG. 3, the preprocessing or postprocessing process may be optionally performed. In one embodiment, the home appliance control server 200 may perform only the preprocessing process on the question. In another embodiment, the home appliance control server 200 may perform only the preprocessing process on the answer. In still another embodiment, the home appliance control server 200 may perform both the preprocessing process on the question and the postprocessing process on the answer.

Meanwhile, the user may check the answer suitable for his or her home appliance and environment. When the user performs a positive or negative evaluation on the second answer message through the client device 100 or the home appliance 10 or when the user controls the home appliance according to the second answer message, the home appliance control server 200 may calculate the accuracy of the preprocessing or postprocessing process and store the calculated accuracy as history information.

Referring to the example of FIG. 3, when the communication unit 210 of the home appliance control device 200 receives the first question message from the client device 100 or the home appliance 10 (S1a, S1b), the control unit 250 of the home appliance control device 200 may selectively perform preprocessing (S2). In addition, the communication unit 210 transmits one of the first question message or the second question message obtained by preprocessing the first question message to the LLM server and receives the first answer message (S2 to S5).

In addition, the communication unit 210 may transmit one of the first answer message or the second answer message obtained by postprocessing the first answer message to the client device 100 or the home appliance 10 (S6 to S7a, S7b).

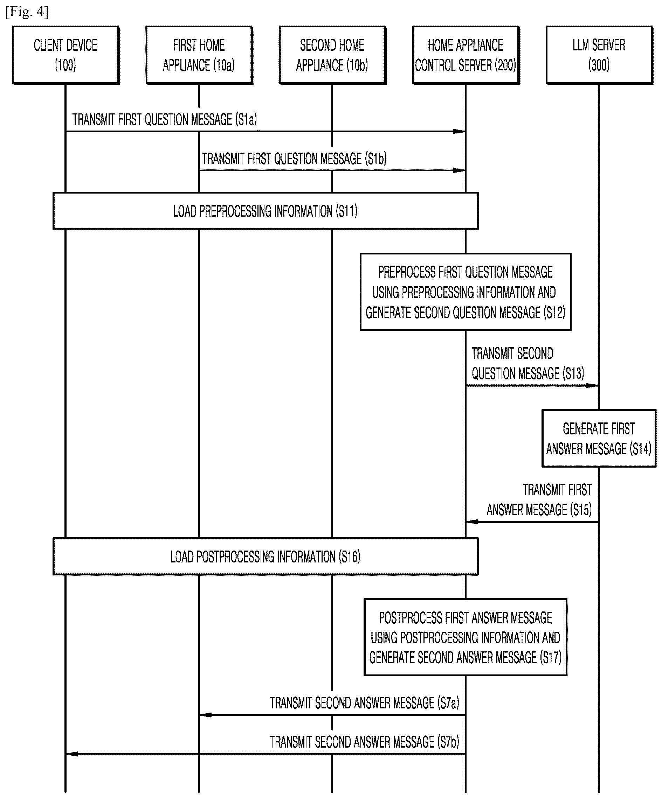

FIG. 4 is a view illustrating the preprocessing process according to one embodiment of the present invention in more detail.

FIG. 4 illustrates a process of performing preprocessing/postprocessing using preprocessing information required for preprocessing or postprocessing information required for postprocessing. In particular, the example of FIG. 4 presents a process of preprocessing a question message or postprocessing an answer message using state information, history information, identification information, or the like of a home appliance or a client device in order to provide personalized information using an LLM.

Operations S1a and S1b in which the communication unit 210 of the home appliance control server 200 receives the first question message from the client device 100 or a first home appliance 10a have been described with reference to FIG. 3.

The control unit 250 of the home appliance control server 200 loads preprocessing information corresponding to the first question message from the storage unit 220 of the home appliance control device (S11). The term "loading the preprocessing information" refers to a process in which the control unit 250 retrieves and reads out information required for preprocessing (preprocessing information) from the storage unit 220.

Alternatively, the term "loading the preprocessing information" refers to a process in which the control unit 250 and the communication unit 210 requests and receives necessary information from the first home appliance 10a, a second home appliance 10b, or the client device 100. Here, the second home appliance 10b corresponds to the first question message.

According to one embodiment of the present invention, the preprocessing information may include state information of one or more of the first home appliance 10a or the second home appliance 10b corresponding to the first question message. According to another embodiment of the present invention, the preprocessing information may include history information or identification information of one or more of the first home appliance 10a, the second home appliance 10b, or the client device 100. The identification information may include the model name, type, etc.

When the first question message relates to cooking, the second home appliance 10b may be, for example, a refrigerator, and the preprocessing information may include object information, such as stored food materials, stored time information, information on food materials to be processed urgently, information on food materials preferred by the user, etc.

When the first question message relates to cooking, the second home appliance 10b may be, for example, homes appliances such as an induction cooker, an infrared oven, and the like, and the preprocessing information may include, for example, identification information on the home appliances.

When the first question message relates to cooking, the second home appliance 10b may be, for example, home appliances such as an induction cooker, an infrared oven, or the like, and the preprocessing information may be, for example, history information such as previous cooking instructions, options, etc.

When the first question message relates to cooking, the preprocessing information may be, for example, history information (e.g., previous preferred foods, food materials, and the like) of the client device 100.

The client device 100, the first home appliance 10a, the second home appliance 10b, and the like may transmit the state information, the history information, the identification information, and the like to the home appliance control server 200 in real time or according to a schedule, and the storage unit 220 of the home appliance control server 200 may store the information.

Alternatively, after receiving the first question message, the control unit 250 and the communication unit 210 of the home appliance control server 200 may request one or more of state information, history information, or identification information from the client device 100, the first home appliance 10a, and the second home appliance 10b. In addition, the control unit 250 of the home appliance control server 200 may store information transmitted by the client device 100, the first home appliance 10a, the second home appliance 10b, and the like in the storage unit 220.

Thereafter, the control unit 250 of the home appliance control server 200 preprocesses the first question message using the preprocessing information and then generates the second question message (S12). The process of transmitting the generated second question message to the LLM server 300 and receiving the corresponding first answer message (S3 to S5) is illustrated in FIG. 3.

Thereafter, the control unit of the home appliance control server 200 loads the postprocessing information to postprocess the first answer message (S16). The term "loading the postprocessing information" refers to a process in which the control unit 250 retrieves and reads out information required for postprocessing (postprocessing information) from the storage unit 220.

Alternatively, the term "loading the postprocessing information" refers to a process in which the control unit 250 and the communication unit 210 requests and receives necessary information from the first home appliance 10a, the second home appliance 10b, or the client device 100. Here, the second home appliance 10b corresponds to the first answer message.

According to one embodiment of the present invention, the postprocessing information may include state information of one or more of the first home appliance 10a or the second home appliance 10b corresponding to the first question message. According to another embodiment of the present invention, the postprocessing information may include history information or identification information of one or more of the first home appliance 10a, the second home appliance 10b, or the client device 100. The identification information may include the model name, type, etc.

When the first question message relates to cooking, the second home appliance 10b may be, for example, a refrigerator, and the postprocessing information may include object information of stored food materials, stored time information, information on food materials to be processed urgently, information on food materials preferred by the user, etc.

When the first question message relates to cooking, the second home appliance 10b may be, for example, homes appliances such as an induction cooker, an infrared oven, and the like, and the postprocessing information may include, for example, identification information on the home appliances.

When the first question message relates to cooking, the second home appliance 10b may be, for example, home appliances such as an induction cooker, an infrared oven, or the like, and the postprocessing information may be, for example, history information such as previous cooking instructions, options, etc.

When the first question message relates to cooking, the postprocessing information may be, for example, history information (e.g., previous preferred foods, food materials, and the like) of the client device 100.

The client device 100, the first home appliance 10a, the second home appliance 10b, and the like may transmit the state information, the history information, the identification information, and the like to the home appliance control server 200 in real time or according to a schedule, and the storage unit 220 of the home appliance control server 200 may store the information.

Alternatively, after receiving the first answer message, the control unit 250 and the communication unit 210 of the home appliance control server 200 may request one or more of state information, history information, or identification information from the client device 100, the first home appliance 10a, and the second home appliance 10b. In addition, the control unit 250 of the home appliance control server 200 may store information transmitted by the client device 100, the first home appliance 10a, the second home appliance 10b, and the like in the storage unit 220.

Thereafter, the control unit 250 of the home appliance control server 200 postprocesses the first answer message using the postprocessing information and then generates the second answer message (S17). The process of transmitting the generated second answer message to the client device 100 or the first home appliance 10a (S7a, S7b) is illustrated in FIG. 3.

In FIG. 4, the home appliance control server 200 may perform only one of the preprocessing operation (S11, S12) or the postprocessing operation (S16, S17).

When only the preprocessing operation is performed, the communication unit 210 may transmit the first answer message to the client device 100 or the first home appliance 10a.

When only the preprocessing operation is performed, the communication unit 210 may transmit the first question message to the LLM server 300.

According to the above embodiment, by separating an external server (e.g., ChatGPT or the like) that provides services based on an LLM from the home appliance control server 200 that stores and processes personal information related to the user's use of home appliances or controls the home appliances, LLM services can be used by reflecting the individual characteristics of the user while protecting personal information.

For example, kitchen appliances (a refrigerator, an induction cooker, an oven, and the like), air-conditioning appliances (an air conditioner, a fan, an air purifier), content-based appliances (a TV, an audio system), laundry appliances (a washing machine, a drying machine, a garment care appliance), cleaning appliances (a cordless cleaner, a robot cleaner), and the like may provide specific functions and store information on the histories and current statuses of the provided functions within the home appliance or transmit these information to the home appliance control server 200.

The user may obtain answers to questions related to the home appliances from the LLM server 300. During this process, the user does not need to specifically input various information on his or her home appliances or preference to the LLM server 300 according to the above embodiment. The home appliance control server 200 may generate customized questions and answers by preprocessing/postprocessing questions or answers in combination with the personalized user information, thereby increasing the accuracy of answers to questions.

To this end, an external server (e.g., a ChatGPT server) implementing an LLM may be implemented separately from the home appliance control server.

That is, the LLM server 300 provides an interactive chatbot service based on a high-performance natural language processing artificial intelligence (AI) model GPT. The home appliance control server 200 may control home appliances or store various information generated from home appliances.

Additionally, the home appliance control server 200 may further include a voice server function for processing voice. In addition, the home appliance control server 200 may use customer data information (e.g., usage history and state information of home appliances, identification information, and the like) stored in the storage unit 220 to provide application services that preprocess a question message or postprocess an answer message.

In this case, the customer data information may be protected within the scope of institutional regulations such as the Personal Information Protection Act, and improved information processing can be achieved without sharing with external servers.

In addition, the storage unit 220 of the home appliance control server 200 may store monitoring results and control history information of kitchen/air conditioning/cleaning/laundry products (home appliances) of individual customers, which may be used as preprocessing or postprocessing information.

In addition, the home appliance control server 200 can increase the accuracy of personalized services in conjunction with the high-performance question/answer (text)-based interactive chatbot service of the LLM server 300.

That is, by using the high-performance question/answer service of the LLM server 300 implemented separately from the home appliance control server 200 and at the same time, preventing the leakage of monitoring/control history information/detailed identification information of kitchen/air conditioning/cleaning/laundry products (home appliances) of individual customers stored in the home appliance control server 200, the risk of personal information leakage can be minimized.

Hereinafter, a process of preprocessing questions and postprocessing answers using home appliances corresponding to a kitchen product according to one embodiment of the present invention will be described. For example, it is assumed that a user owns one or more cooking home appliances, refrigerators, etc.

When the user asks for a recipe for a specific dish, the home appliance control server 200 may perform a preprocessing process of adding information on food materials stored in the refrigerator to a question message, transmit the question message to the LLM server 300, and receive an answer message corresponding to the recipe from the LLM server 300. To this end, the refrigerator may transmit information on the food materials stored in the refrigerator to the home appliance control server 200.

In addition, when the user requests a recipe for a specific dish, the home appliance control server 200 may receive an answer message corresponding to the recipe from the LLM server 300 and generate a postprocessed answer message suitable for the cooking home appliance of the user.

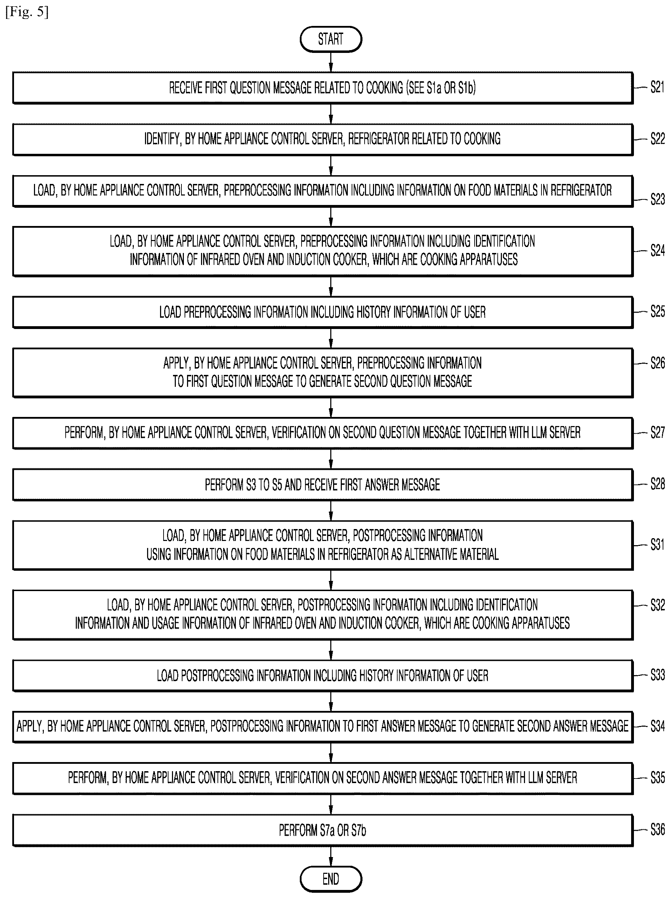

FIG. 5 is a view illustrating a process of recommending possible dishes using food materials stored in a refrigerator according to one embodiment of the present invention.

The home appliance control server 200 receives the first question message related to cooking (S21). Reference is made to S1a or S1b in FIGS. 3 and 4. The home appliance control server 200 determines that the first question message is related to cooking and identifies the refrigerator, which is the home appliance related to cooking (S22). After identifying the refrigerator, the home appliance control server 200 loads preprocessing information including information on the food materials stored in the refrigerator (S23).

The refrigerator may periodically transmit internal food material information or videos to the home appliance control server 200. Alternatively, the home appliance control server 200 may request the refrigerator to transmit current internal food material information.

In addition, when placing or removing the food materials from the refrigerator, the user may input a barcode displayed on the food material or directly generate a list of food material information and input the list into the refrigerator. The acquisition of the food material information from the refrigerator may be implemented in various ways, such as video or image capture, barcode input, manual input, etc.

In addition, the home appliance control server 200 loads preprocessing information including identification information for an infrared oven and an induction cooker, which are cooking apparatuses (S24). For example, the model name of the induction cooker or the infrared oven may correspond to the preprocessing information.

In addition, the home appliance control server 200 loads preprocessing information including user history information (S25). When information on the user's preferred dishes, allergy information, and the like has been previously stored, the home appliance control server 200 may load the information as preprocessing information.

Thereafter, the home appliance control server 200 applies the preprocessing information to the first question message to generate the second question message (S26). For example, when the first question message is a cooking recommendation question such as "Tell me what to cook for dinner for my wife" and the refrigerator contains chicken breast, the home appliance control server 200 may determine that chicken breast is present and generate the second question message including this information as follows.

An example of the second question message may include "Tell me what to cook for dinner for my wife using chicken breast" or "Tell me what to cook for dinner for my wife. I has chicken breast as a food material."

When there are multiple food mateirals in the refrigerator, information on multiple food materials (e.g., chicken breast, onion) may be applied as preprocessing information to generate the second question message.

Examples of the food materials included in the preprocessing information include seasonings, sauces, vegetables, meat, etc. In addition, the arrival date, expiration date, or the like of the food material may be included in the preprocessing information. For example, the preprocessing information may include the names, arrival dates, expiration dates, and the like of the food materials, such as {milk (refrigerated, expired 28 days ago), eggplant (refrigerated, expired 27 days ago), chicken breast (refrigerated, 5 days remaining), onion (refrigerated, 7 days remaining), and pork (frozen, 15 days remaining)}.

In addition, the home appliance control server 200 may select specific food material information based on an expiration date, an arrival date, or the like to generate the second question message.

In addition, as in S24, the home appliance control server 200 may apply information on a specific cooking apparatus as preprocessing information to generate the second question message.

In this case, an example of the second question message may include "Tell me a dinner recipe for my wife using chicken breast and a convection oven," "Tell me a dinner recipe for my wife. The available ingredient is chicken breast, and the cooking apparatus is an induction cooktop," etc.

In addition, as in S25, when "peanut allergy" is stored in the history information of the user, the home appliance control server 200 may add "peanuts excluded" to the second question message.

In this way, when the home appliance control server 200 loads the food material information in the refrigerator as preprocessing information to generate the second question message, the LLM server 300 may generate a more accurate answer to the current situation of the user.

For example, in a case in which the refrigerator includes chicken breast and onions and the LLM server 300 answers the request "Tell me what to cook for my wife for dinner" without this information, when a food material that is not available in the refrigerator (e.g., seafood spaghetti) is included in the answer message, the user has the inconvenience of having to ask again.

Accordingly, the home appliance control server 200 may employ preprocessing information to generate the second question message, thereby providing a personalized answer message to the user.

Meanwhile, the home appliance control server 200 may perform a process of verifying whether the second question message generated in S22 to S26 may replace the first question message together with the LLM server 300 (S27). For example, the home appliance control server 200 may transmit the first and second question messages to the LLM server 300 and verify the suitability for replacement.

Thereafter, the home appliance control server 200 transmits the second question message to the LLM server 300 and receives the first answer message as described in S3 to S5 (S28).

When the first answer message relates to a specific cooking recipe, the home appliance control server 200 loads postprocessing information using information on the food materials in the refrigerator as substitute food materials (S31). The home appliance control server 200 may load the postprocessing information in the same manner as the loading of the preprocessing information.

In addition, as described in S24, the home appliance control server 200 loads postprocessing information including identification information, usage information, and the like of the infrared oven and the induction cooker, which are cook appliances to be used for cooking (S32). For example, postprocessing information may include information on the model name, operation manual of the induction cooker or the infrared oven. Likewise, as described in S25, postprocessing information including user history information may be loaded.

In addition, the home appliance control server 200 applies postprocessing information to the first answer message to generate the second answer message (S34). For example, it is assumed the first answer message is "Cook chicken breast until medium-cooked, then add garlic and cook again." The home appliance control server 200 may load information on the infrared oven as postprocessing information for the chicken breast cooking method. When the infrared oven has a chicken breast cooking setting, the home appliance control server 200 may generate a second answer message, such as "Cook the chicken breast for 10 minutes in the second stage of the infrared oven, then add garlic and cook for an additional 5 minutes."

In addition, the home appliance control server 200 may employ "onion," which is a food material in the refrigerator, instead of "garlic" included in the first answer message, as postprocessing information to generate a second answer message, such as "Cook the chicken breast until medium-cooked, then add onion and cook again."

In addition, when "peanut allergy" is included in the postprocessing information, the home appliance control server 200 may exclude "peanut" from the food materials in the first answer message related to the recipe.

In addition, the home appliance control server 200 may employ the cooking apparatus and the food materials as postprocessing information to generate a second answer message, such as "Bake the chicken breast for 10 minutes in the second stage of the microwave oven, then add the onions and cook for an additional 5 minutes."

In addition, the home appliance control server 200 may perform a process of verifying whether the second answer message generated in S31 to S34 may replace the first answer message together with the LLM server 300 (S35). For example, the home appliance control server 200 may transmit the first and second answer messages to the LLM server 300 and verify the suitability for replacement.

Alternatively, the home appliance control server 200 may transmit a message, such as "Can I use onions instead of garlic?" to the LLM server 300, and then when receiving a positive answer, the home appliance control server 200 may add onions instead of garlic to the second answer message.

Thereafter, the home appliance control server 200 transmits the second answer message to the client device 100 or the home appliance 10 as described in S7a or S7b (S36).

The example of FIG. 5 includes both the preprocessing operation (S22 to S27) and the postprocessing operation (S31 to S35), but only preprocessing or postprocessing may be performed according to the implementation method.

In addition, the home appliance control server 200 may use the LLM server 300 or make its own determination during the process of checking alternative materials. For its own determination, the home appliance control server 200 may have a group of alternative materials.

In addition, the home appliance control server 200 may transmit both the first and second question messages and the first and second answer messages to the client device 100 or the home appliance 10. This allows the user to check the modified information during the process of personalizing questions and answers.

To summarize the example of FIG. 5, when the first question message requests a food recommendation or cooking method recommendation, the preprocessing information or the postprocessing information may include information on objects stored in the refrigerator. Alternatively, the preprocessing information or the postprocessing information may include information on preferred foods from the history information of the client device 100.

In another embodiment of the present invention, the preprocessing information or the postprocessing information may include information on the names, types, or manuals of one or more home appliances registered to the client device 100. Here, the term "registered to the client device 100" refers to a home appliance of the user, and in addition, the home appliance control server 200 may store information on the home appliances of the user in various ways. Accordingly, the home appliance information to be used in the preprocessing or postprocessing information may include information on the names, types, or manuals of the home appliances registered as being used or owned by the user.

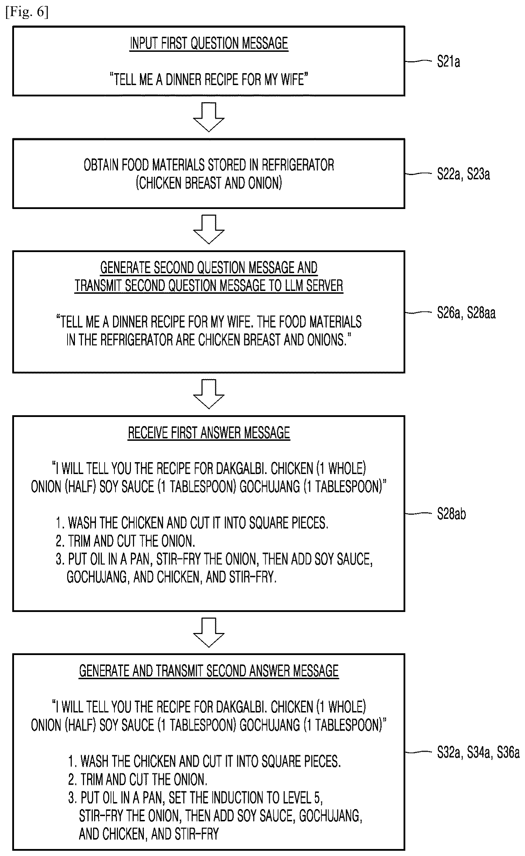

FIG. 6 is a view illustrating a process of modifying a question message and an answer message by reflecting information on food materials stored in the refrigerator and cooking apparatuses according to one embodiment of the present invention.

The home appliance control server 200 automatically and simultaneously transmits information on food materials in the refrigerator and adds cooking apparatus information to the received recipe. When the first question message is input (S21a), the home appliance control server 200 adds the food materials (chicken breast and onion) in the refrigerator, generates a second question message, such as "Tell me a dinner recipe for my wife. The food materials in the refrigerator are chicken breast and onion," and transmits the second question message to the LLM server 300 (S22a, S23a, S26a, S28aa). These processes are as those described in S21 to S28 in FIG. 5.

In addition, the home appliance control server 200 receives the first answer message including detailed information on cooking materials and processes from the LLM server 300 (S28ab) and adds "Set the induction cooker to level 5," which is the cooking apparatus instruction (manual information), to "3. Add oil to the pan, fry the onion, then add soy sauce, gochujang, and chicken, and stir-fry" in the cooking process.

Consequently, the home appliance control server 200 generates a second answer message, such as "3. Add oil to the pan, set the induction cooker to level 5, then fry the onion, add soy sauce, gochujang, and chicken, and stir-fry," and transmits the second answer message to the client device 100 or the home appliance 10 (S32a, S34a, S36a). These processes are as those described in operations S28 to S36 in FIG. 5.

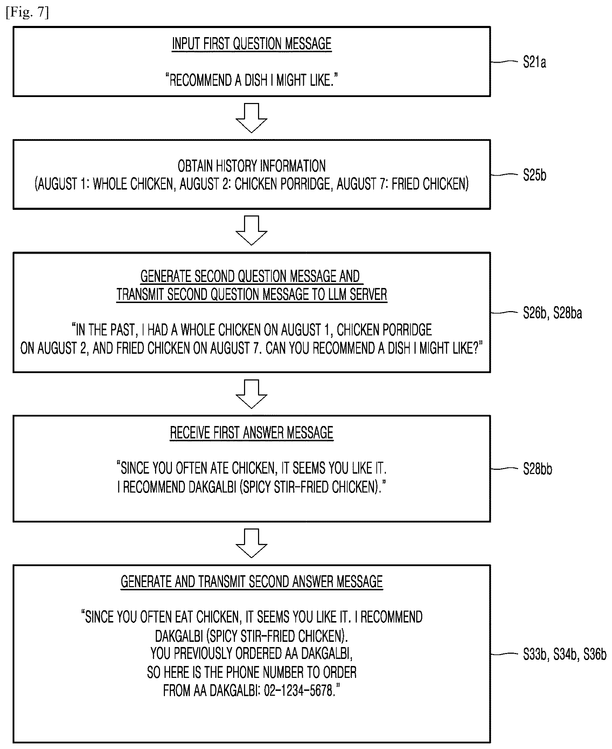

FIG. 7 is a view illustrating a process of modifying a question message and an answer message by reflecting a previous cooking history or interest information of a user according to one embodiment of the present invention. The process of reflecting a user's history in a question or answer will be described.

Since individual cooking preferences and previous order or cooking history differ, the user's preferences may be added to the question or answer.

That is, when receiving the first question message, such as "Recommend a dish I might like," (S21b), the home appliance control server 200 obtains the history information of the user as preprocessing information (S25b). For example, the home appliance control server 200 may obtain, as preprocessing information, the meal information of the user stored in the client device 100, such as "one whole chicken on August 1, chicken porridge on August 2, and chicken on August 7."

The home appliance control server 200 employs the preprocessing information to generate a second question message, such as "I ate one whole chicken on August 1, chicken porridge on August 2, and chicken on August 7. Please recommend a dish that I might like," and transmits the second question message to the LLM server 300 (S26b, S28ba). These processes are as those described in S21 to S28 in FIG. 5.

Thereafter, the home appliance control server 200, which has received a first answer message from the LLM server 300, such as "You seem to like chicken because you often eat chicken. Therefore, I recommend dakgalbi" (S28bb), obtains the dakgalbi order record of the client device 100 as postprocessing information. In addition, the home appliance control server 200 generates and transmits a second answer message, such as "Since you have frequently eaten chicken, it appears that you like chicken, so chicken galbi is recommended. You previously ordered AA Chicken Galbi; therefore, the phone number for ordering AA Chicken Galbi is 02-1234-5678" (S33b, S34b, S36b). These processes are as those described in S28 to S36 in FIG. 5.

As illustrated in FIG. 7, when a user inputs a question requesting a dish recommendation, the home appliance control server 200 loads information on the preferred food of the user as preprocessing information, adds the information to a second question message, and transmits the second question message to the LLM server 300.

In addition, when the first answer message includes a specific dish, the home appliance control server 200 may obtain a record of the previous orders of the user for that dish as postprocessing information to generate a second answer message.

In FIGS. 6 and 7, when the client device 100 provides a like or dislike response to the second answer message, the home appliance control server 200 may store this information and use the stored information as user history information. For example, when recommending "dakgalbi" and receiving a disliked response from the client device 100, the home appliance control server 200 may later add information "Dakgalbi is a disliked dish" to a subsequent dish recommendation question message.

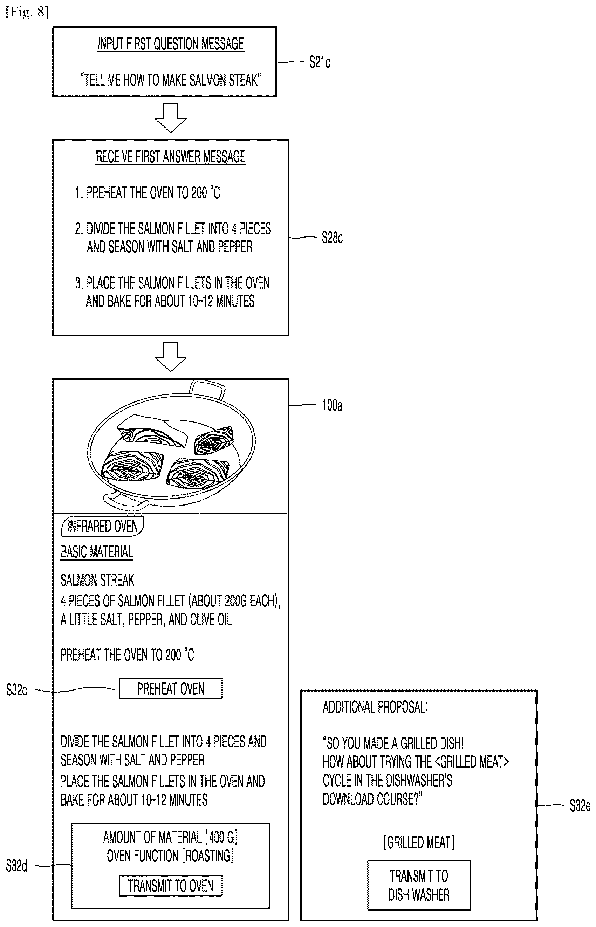

FIG. 8 is a view illustrating a process of controlling the use of a home appliance according to one embodiment of the present invention.

The process of adding the manual information of the home appliance during the process of loading post-processing information has been described. Such a postprocessing process will be described in more detail. When a user inputs a first question message requesting salmon steak cooking instructions using the client device 100 (S21c), the home appliance control server 200 transmits the first question message to the LLM server 300 and receives a first answer message (S28c). In this case, the first answer message includes information related to oven preheating and baking using the oven.

The home appliance control server 200 adds an interface for executing a control command to preheat the oven to the first answer message as in S32c.

In addition, the home appliance control server 200 adds manual information for setting the amount of material and oven functions so that the user may bake salmon using the oven and an interface for transmitting this information to the oven to the first answer message as in S32d. In this case, the user may modify the amount of material.

When the user selects a "Preheat Oven" interface (S32c) on a client device 100a, the selection information is transmitted to the home appliance control server 200, and the home appliance control server 200 transmits a control command to the oven to perform a "preheat" operation. As a result, the oven starts preheating.

In addition, the user may modify the amount of material displayed in S32d. In addition, a "Send to Oven" interface in S32d is selected, the selection information (selection of the amount of material and a roasting function) is transmitted to the home appliance control server 200, and the home appliance control server 200 transmits a control command to the oven to select the amount of material and the roasting function. As a result, the user may control the operation of the home appliances according to the transmitted recipe.

In addition, the home appliance control server 200 may load a command to control a dishwasher, which is a subsequent home appliance related to cooking, as post-processing information to generate a second answer message. For example, as in S32e, the second answer message may include an interface for transmitting "Roast Meat," which is a setting for washing dishes after roasting, to the dishwasher. When completing cooking, the user may select a "Send to Dishwasher" interface of the second answer message to control the washing setting of the dishwasher to "Roast Meat."

According to the example of FIG. 8, the home appliance control server 200 may form a database that accumulates reliable domain knowledge about home appliances and perform background tasks to infer and respond based on the corresponding knowledge.

The home appliance control server 200 enables the user to control cooking apparatuses with a single button click so that recipes provided by the LLM server 300 may be immediately applied to the cooking process. That is, in a state in which the user retains the information on the kitchen appliances, the home appliance control server 200 performs postprocessing by adding control commands for the cooking apparatuses to the recipe so that each kitchen home appliance may be controlled to an optimal cooking state according to the recipe provided by the LLM server 300.

As a result, when the user selects the control interface for the home appliance displayed in the second answer message, the home appliance may be set to the optimal cooking state under the control of the home appliance control server 200 to perform the cooking process.

To this end, the home appliance control server 200 may postprocess phrases corresponding to the use of the home appliance. For example, for phrases, such as "Grill ~ in a pan, cook ~ in a pan," information and control commands linked to an induction cooker may be generated.

In addition, for phrases, such as "Roast ~ in an oven, preheat ~ the oven," information and control commands linked to an infrared oven may be generated.

In addition, when the name of a predetermined home appliance (e.g., an air fryer, an oven, or the like) appears in the first answer message, information on the home appliance of the user is postprocessed and added to the second answer message. To this end, the home appliance control server 200 may have a group of compatibly operable home appliances.

In addition, when the first answer message includes water, the home appliance control server 200 may include a control command to link a water purifier. The home appliance control server 200 may recommend the amount of material and the functions based on a recipe and provide an interface for the user to modify the corresponding information.

In areas in which home appliance control is required, the home appliance control server 200 activates an interface, such as a "Send to Home appliance" button, to be displayed on the client device 100a. In addition, the home appliance control server 200 may control the home appliances so that cooking times or cooking settings are automatically changed when the amount of material or the functions are modified.

The example of FIG. 8 focuses on postprocessing, but the control of the operation of the home appliances may also be applied to preprocessing.

The control unit 250 of the home appliance control server 200 may generate a control command to control the operation of the second appliance corresponding to one or more of the first question message, the second question message with preprocessing applied, the first answer message, or the second answer message with postprocessing applied and add the control command to the second answer message.

Alternatively, when the execution of the control command included in the second answer message is instructed, the home appliance control server 200 may transmit the control command to the second home appliance.

The home appliance control server 200 may protect the personal information of the user while using publicly available information provided by the LLM server 300 by combining the information generated during the question or answer process with the specific history, home appliance information, and the like of the user. In addition, since various information stored in home appliances and client devices pose privacy issues, the home appliance control server 200 may handle these information and add personalized information into the information provided by the LLM server 300, thereby increasing the accuracy of the answer.

According to the examples of FIGS. 6 to 8, the home appliance control server 200 may add information on food materials in the refrigerator, previous cooking history, preferred recipes, and the like to the user's question or preprocess the question message of the user and provide the preprocessed result to the LLM server 300.

For example, even when the user does not explicitly specify the food materials stored in the refrigerator, recipes may be recommended by using the currently available food materials in the refrigerator or suggesting dishes that may be prepared with the food materials. In addition, by determining the availability of alternative materials, the user may obtain alternative materials and recipes adapted to the currently available materials.

In addition, the user may receive recipe recommendations tailored to individual cooking preferences, and using the identification information of the user, the home appliance control server 200 may identify previous cooking history information and preferred cooking information and preform preprocessing/postprocessing that adds the information to a question or modifies an answer, thereby providing personalized recipe recommendations.

In addition, the answer message to the user's question may include an interface that enables the user to select or modify the amount of material and functions according to the cooking apparatus in use. In addition, the answer message may include control commands for the home appliance, such as automatically setting the cooking time depending on changes in food materials or functions and the like.

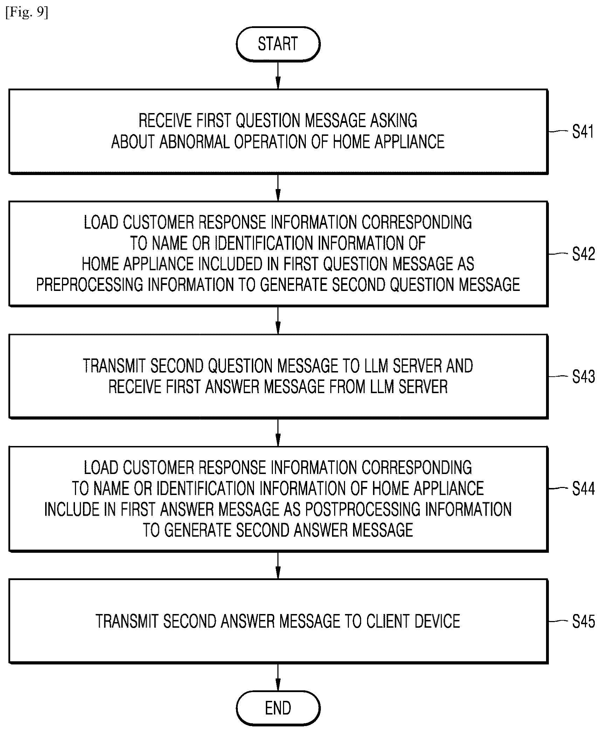

FIG. 9 is a view illustrating a process of preprocessing a user's question regarding the abnormal operation of a home appliance and a process of postprocessing the result according to one embodiment of the present invention.

The communication unit 210 of the home appliance control server 200 receives a first question message inquiring about the abnormal operation of the home appliance (S41). When the first question message includes the name or identification information of the home appliance, the control unit 250 loads customer response information corresponding to the name or identification information as preprocessing information to generate a second question message (S42).

In addition, the communication unit 210 of the home appliance control server 200 transmits the second question message to the LLM server 300 and receives a first answer message from the LLM server 300 (S43).

The control unit 250 loads customer response information corresponding to the name or identification information of the home appliance included in the first answer message as postprocessing information to generate a second answer message (S44). In addition, the communication unit 210 of the home appliance control server 200 transmits the second answer message to the client device 100 (S45).

When the home appliance abnormally operates, the user may ask a question by adding the name or identification information of the home appliance to the first question message. For example, the user may ask, "What is the sound coming from the refrigerator right now?" or "Why is the washing machine vibrating during operation?"

Since this is a question about an abnormal condition of the home appliance, the control unit may load customer response information corresponding to the name or identification information of the home appliance included in the first question message as preprocessing information. The customer response information includes, for example, answer information to frequently asked questions about the corresponding home appliance, manual information of the corresponding home appliance, etc.

For example, the control unit 250 may generate a second question message by adding an answer file for frequently asked customer questions about the corresponding refrigerator to the first question message.

Alternatively, the control unit 250 may generate the second question message by adding a manual file corresponding to the identified home appliance model to the first question message. Alternatively, the control unit 250 may extract only the content corresponding to the first question message from the answer file or manual file for the customer question to generate the second question message.

Alternatively, the control unit 250 may load customer response information corresponding to the name or identification information of the home appliance included in the first question message as postprocessing information corresponding to the first answer message to generate a second answer message.

In addition, the control unit 250 may add the test results for the home appliance to the first answer message during the postprocessing process.

In addition, the home appliance control server 200 may check state information transmitted during the operation of the home appliances and perform preprocessing on the first question message or postprocessing on the first answer message.

Examples of generating user-specific questions regarding the abnormal operation of the home appliance are shown in Table 1 for a refrigerator and Table 2 for a washing machine.

**[Table 1]**

| First question message | Name/ identification information of home appliance | Customer response information | Second question message |
|---|---|---|---|
| Is there a humming or clicking noise coming from the refrigerator? What's the reason? | Refrigerator (model: LG-AA-01) | In manual file of LG-AA-01 refrigerator, sound-related issues (Q&A text or image file related to refrigerator noises) | Refrigerator (model: LG-AA-01) is making a humming or rattling noise? Refrigerator manual: Caused by compressor and fan noise. |
| Is the "clicking" sound coming from the refrigerator? What's the reason? | Refrigerator (model: LG-AA-02) | Sound-related section in manual file of LG-AA-02 refrigerator (Q&A text or image file related to refrigerator noises) | Refrigerator (model: LG-AA-02) is making a humming or rattling noise? Refrigerator manual: Sound caused by temperature changes |
| What is causing the refrigerator door to fail to close properly? | Refrigerator (model: LG-AA-03) | In Q&A file of LG-AA-03 refrigerator, door opening/closing-related issues of the refrigerator (text or image file) | What is causing the refrigerator (model: LG-AA-03) door to fail to close properly? |
| | | | Q&A file of refrigerator: Door opening/closing error response |
| The refrigerator is not dispensing ice. Please tell me why. | Refrigerator (model: LG-AA-04) | In Q&A file of LG-AA-04 refrigerator, ice-related issues of the refrigerator (text or image file) | The refrigerator (model: LG-AA-04) is not dispensing ice. Please tell me why. |
| | | | Q&A file of refrigerator: Response to ice-related issues |

**[Table 2]**

| First question message | Name/ identification information of home appliance | Customer response information | Second question message |
|---|---|---|---|
| Why does the washing machine make a thumping noise during spin? | Washing machine (model: LG-BB-01) | In Q&A file of LG-BB-01 washing machine, spin noise-related issues (text or image file) | Why does the washing machine (model: LG-BB-01) make a thumping noise during spin? Q&A file of washing machine: Response to spin-related issues |
| Why does the washing machine's spin time keep changing? | Washing machine (model: LG-BB-02) | In Q&A file of LG-BB-02 washing machine, spin time change-related issues (text or image file) | Why does the washing machine (model: LG-BB-02)'s spin time keep changing? Manual file of washing machine: Response to spin time change |

As shown in Tables 1 and 2, the home appliance control server 200 receiving the first question message uses the user's home appliance information, name, and the like to identify the model name and checks a Q&A file or manual of the corresponding model to provide a second question message to the LLM server 300 so that the LLM server may process a more accurate question.

The home appliance control server 200 may add the entire Q&A/manual file to the second question message. Alternatively, the home appliance control server 200 may extract only information (e.g., text or image file) from a specific category within the Q&A/manual files and add the information to the second question message.

In addition, examples of generating user-specific answers to the abnormal operation of home appliances are shown in Tables 2 and 3. When the LLM server 300 provides a predetermined answer to the first or second question message given as shown in Tables 1 and 2, the home appliance control server 200 may employ customer response information to generate a second answer message.

Next, examples of adding customer response information to the first answer message provided by the LLM server 300 for postprocessing are shown in Table 3 (refrigerator example) and Table 4 (washing machine example).

**[Table 3]**

| First question message | Name/ identification information of home appliance Customer response information | First answer message | Second answer message |
|---|---|---|---|
| Is there a humming or clicking noise coming from the refrigerator? What's the reason? | Refrigerator (model: LG-AA-01) | The sounds from the refrigerator are due to the compressor, the fan, or changes in temperature. | The refrigerator (model namer: LG-AA-01) makes noise when starting or stopping, caused by the operation of the compressor or the fan. It works on a similar principle to the sounds a vehicle makes when starting or turning off the engine. |
| | In manual file of refrigerator, sound-related issues (Q&A text or image file related to refrigerator noises) | | |
| Is the "clicking" sound coming from the refrigerator? What's the reason? | Refrigerator (model: LG-AA-02) | The sounds from the refrigerator are due to the compressor, the fan, or changes in temperature. | The refrigerator (model: LG-AA-02) may have various components expand or contract due to changes in internal temperature inside the refrigerator. In addition, the refrigerator may make noise when its control system operates. |
| | In manual file of refrigerator, sound-related issues (Q&A text or image file related to refrigerator noises) | | |
| What is causing the refrigerator door to fail to close properly? | Refrigerator (model: LG-AA-03) | The refrigerator door may not close properly due to impact or pressure. | The refrigerator door may not close properly due to impact or pressure. |
| | In Q&A file ofrefrigerator, door opening/closing-related issues of the refrigerator (text or image file) | | When closing the door of the refrigerator (model: LG-AA-03), it may briefly remain slightly open before fully closing depending on the force or speed used to close it. Be careful not to close the door too forcefully. |
| The refrigerator is not dispensing ice. Please tell me why. | Refrigerator (model: LG-AA-04) | Ice will not come out when it is stuck together. | Ice will not come out when it is stuck together. |
| | In Q&A file of refrigerator, ice-related issues of the refrigerator (text or image file) | | Please remove the ice bin from the refrigerator (model: LG-AA-04) and shake it. Discard any ice chunks that do not come loose even after shaking the bin. |

**[Table 4]**

| First question message | Name/ identification information of home appliance Customer response information | First answer message | Second answer message |
|---|---|---|---|
| Why does the washing machine make a thumping noise during spin? | Washing machine (model: LG-BB-01) | The noise during the spin cycle of washing machine is caused by unevenly distributed laundry. | The noise during the spin cycle of washing machine is caused by unevenly distributed laundry. |
| | In Q&A file of washing machine, spin noise-related issues (text or image file) | | |
| | | | Please evenly spread the laundry inside the washing machine (model: LG-BB-01). Install the machine on a firm, level surface and make sure it is perfectly horizontal to prevent rocking. Remove the transport bolts before use. |
| Why does the washing machine's spin time keep changing? | Washing machine (model: LG-BB-02) | There is a problem with the laundry. | There is a problem with the laundry. |
| | In Q&A file of washing machine, spin time change-related issues (text or image file) | | For the washing machine (model: LG-BB-02), when the laundry shifts to one side during spinning, it can cause increased noise and vibration. To reduce imbalance, the machine automatically adjusts itself. The spin cycle may be delayed by about 30 minutes. Please separate laundry by type before spinning. |

As shown in Tables 3 and 4, the control unit 250 may load customer response information corresponding to the name or identification information included in the first question message or the first answer message as postprocessing information to generate a second answer message.

The example of FIG. 9 may be applied when a user asks a question about an abnormal operation or state of the product. The question message may be generated by adding information on the home appliance of the user to the question, and the answer provided by the LLM server 300 may be postprocessed with information on the home appliance of the user to generate a new answer message.

In addition, the control unit 250 may receive diagnosis result for the home appliance (e.g., smart diagnosis result or remote diagnosis result) and use the results to generate the second answer message. As a result, after the user asks a question about the abnormal operation or failure of his or her home appliance, the user may determine an accurate answer through the diagnosis result of the product the user is actually using or owning.

That is, the control unit 250 may remotely diagnose a home appliance that the user is curious about or encounters a problem while receiving the first answer message in response to the first question message of the user from the LLM server 300 and add the diagnosis result to the second answer message.

When the home appliance control server 200 may identify the information without the intervention of the LLM server 300, the home appliance control server 200 may extract a portion of the customer response information and transmit the extracted information to the client device 100 without transmitting a separate question to the LLM server 300.

The diagnosis result for the home appliance includes, for example, results of aggregating state information or operation information that the home appliance normally transmits to the home appliance control server 200.

Alternatively, the home appliance control server 200 may instruct the home appliance to perform a diagnosis and receive the diagnosis result. The diagnosis result may include guide information on follow-up actions of the user, such as "As the smart diagnosis result, an abnormality was detected in the xxx function of the fan motor of the refrigerator. Service is required. The diagnosis result will be sent to the customer center, and we will contact you by phone."

In the example of FIG. 9, when the user asks a question about a product malfunction or responds to the question, the user may also receive the smart diagnosis result of his or her home appliance. As a result, the smart diagnosis result for the home appliance are displayed, and the answer message is postprocessed to be automatically connected to the customer service center when an abnormality is identified. Accordingly, the user may acquire solutions by asking questions about problems, and the home appliance control server 200 may provide these solutions through an on-screen interface via the client device 100.

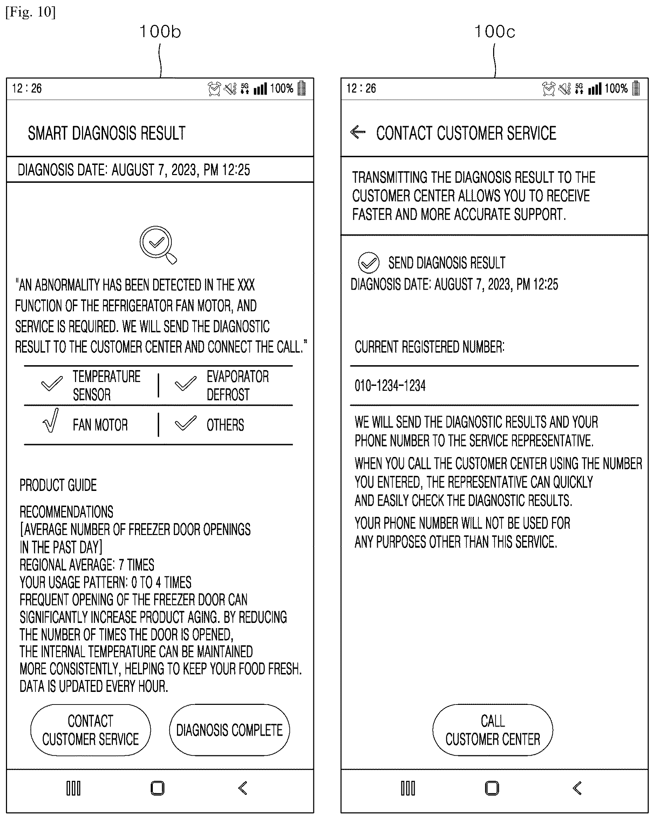

FIG. 10 is an interface illustrating the result of including a diagnosis result in an answer according to one embodiment of the present invention.

As shown in Table 3 or 4, when the user asks a question about a product malfunction or failure, the home appliance control server 200 transmits the question to the LLM server 300 and receives a first answer message. In addition, the home appliance control server 200 instructs the client device 100 to automatically perform the smart diagnosis on the corresponding home appliance. Alternatively, the home appliance control server 200 may instruct the corresponding home appliance to perform a state diagnosis without any separate instruction to the client device 100.

For example, the home appliance control server 200 transmits the first question message in Table 3 or 4 to the LLM server 300 and determines that the corresponding home appliance is a "refrigerator" or "washing machine."

In addition, the home appliance control server 200 may instruct, through the client device 100 or directly to home the appliance, to automatically perform the smart diagnosis on the home appliance (refrigerator or washing machine) managed by the client device 100.

As a result, the home appliance (refrigerator or washing machine) may perform the smart diagnosis and transmit the diagnosis result to the home appliance control server 200. As a result, when the user asks, "There's a humming sound coming from the refrigerator. What's the reason?" the home appliance control server 200 determines that this is a question related to the refrigerator.

In addition, after performing a remote diagnosis on the refrigerator, as shown in FIG. 10, a second answer message, such as "As the smart diagnosis result, an abnormality was detected in the xxx function of the fan motor of the refrigerator. Service is required. The diagnosis result will be sent to the customer center, and we will contact you by phone," may be generated and transmitted to the client device 100.

100b and 100c of FIG. 10 are screens on the client device displaying the smart diagnosis result and guide information on follow-up actions.

100b is an example in which a second answer message including the diagnosis result indicating a malfunction in a motor and the results of diagnosis states of other components is displayed on the client device.

100c is an example in which a second answer message including guide information for resolving the abnormal state included in the second answer message is displayed on the client device.

That is, when the first question message input by the user includes the name or identification information of the home appliance, the communication unit 210 instructs the diagnosis of the home appliance corresponding to the name or identification information. In this case, the home appliance control server 200 may directly instruct the corresponding home appliance to perform a diagnosis. Alternatively, the home appliance control server 200 may instruct the client device 100 transmitting the first question message to automatically perform a diagnosis on the corresponding home appliance.

In addition, the communication unit 210 receives the diagnosis result from the home appliance or the client device 100. The control unit 250 may add the diagnosis result 100b or the guide information 100c for resolving the diagnosis result to the second answer message and transmit the second answer message to the client device 100.

According to the present invention, by separating the LLM server from the appliance control server, various external LLM servers may be used, and in addition, the home appliance control server 200 may handle the processing for personalized user information. As a result, it is possible to provide personalized information tailored to each individual while using a rich interactive chatbot service.

The external server includes various LLM servers, such as Chat GPT and includes, for example, a server providing an interactive chatbot service based on the high-performance natural language processing artificial intelligence (AI) model GPT. Of course, the entity operating the home appliance control server may provide the LLM server.

Unlike conventional chatbots, the home appliance control server 200 may provide the user with necessary information through more precise questions and conversations using the context and specialized information hidden behind the superficial information in the user's question and previous conversation records. In addition, the home appliance control server 200 may postprocess the natural language answers generated by the LLM server 300 to generate precise answers tailored to the user's needs.

For example, as illustrated in the examples of FIGS. 6 to 8, the home appliance control server 200 receiving the user's question related to the use of kitchen appliances and the LLM server's answers may preprocess and postprocess the questions or answers based on the user's home appliances, previous history, current statuses of the home appliances, and the like to provide an interactive AI (which participates in human-like conversations and generates appropriate and consistent text according to the situation) service.

As a result, application services using the customer data of the user may be provided. This is because customer data information may have various procedural limitations when shared with external servers due to institutional issues, such as the Personal Information Protection Act or the like.

The home appliance control server 200 stores monitoring/control history information of home appliances of individual customers. In addition, since the user who installs an app that communicates with the home appliance control server 200 via the client device 100 performs a customer consent process at or after registration, the home appliance control server 200 may store the customer's personal information received with the customer's consent and use the information for preprocessing question messages or postprocessing answer messages.

The home appliance control server 200 may further include a voice recognition function, and in this case, based on speaker recognition, the home appliance control server 200 may estimate the customer's gender, age, region information, and the like and add these information to the question message.

Furthermore, with the customer's consent or the like, the home appliance control server 200 may provide personalized information to the external LLM server 300, and when a user asks a question, may use the stored information, thereby increasing the accuracy of the question.

Referring to the example of FIG. 6, the home appliance control server 200 may use user-customized information, such as information on food materials stored in a refrigerator, and referring to the example of FIG. 7, the home appliance control server 200 may use user-customized information, such as previous cooking history information.

As a result, the home appliance control server 200 can increase the accuracy of personalized services by linking the internal monitoring/control history information on individual customers' home appliances (e.g., kitchen appliances) with the high-performance question/answer (text)-based interactive chatbot service provided by the LLM server 300.

In addition, the home appliance control server 200 may use the high-performance question/answer service of the LLM server 300 and at the same time, simultaneously prevent the leakage of the internal monitoring/control history information on the individual customers' home appliances (e.g., kitchen appliances), thereby minimizing the risks caused by using various external LLM servers.

In addition, the home appliance control server 200 may obtain answers to questions (e.g., product malfunctions) from the LLM server 300 and perform postprocessing, and when the home appliance control server 200 may provide an answer during this process, the home appliance control server 200 may process the information independently without transmitting a separate message to the LLM server 300. For example, operation S43 in FIG. 9 may be omitted.

In addition, as illustrated in FIG. 10, the home appliance control server 200 may identify a home appliance from the user's question and check the previous operation history and current status of the corresponding home appliance. In addition, the home appliance control server 200 may obtain the diagnosis result for the corresponding product to postprocess an answer message in response to a question about the abnormal operation of the home appliance.

When the home appliance control server 200 processes information separately from the LLM server 300, the home appliance control server 200 may use monitoring and control history information for individual customers' home appliances to more precisely preprocess the question message and postprocess the answer message.

In addition, the home appliance control server 200 may use the high-performance LLM server 300 to obtain the answer message and postprocess the answer message, thereby increasing the accuracy of personalized services.

As a result, the home appliance control server 200 may provide personalized services to the user by using the high-performance natural language processing result of the LLM server 300 while preventing leakage of monitoring information, control history information, and the like on the home appliances of the user.

Even though all components constituting the embodiments of the present invention have been described as being coupled or coupled and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments constituting the computer program can be easily inferred by those skilled in the art. Such a computer program may be stored in a computer-readable storage medium and read and executed by a computer, thereby implementing the embodiments of the present invention. The storage media for computer programs include magnetic recording media, optical recording media, and storage media including semiconductor recording devices. In addition, a computer program implementing the embodiments of the present invention includes program modules transmitted in real time through an external device.

The above description focuses on the embodiments of the present invention, but various changes and modifications may be made within the scope of those skilled in the art. Accordingly, it will be understood that these changes and modifications are included within the scope of the present invention as long as they do not depart from the scope of the present invention.

### [DESCRIPTION OF REFERENCE NUMERALS]

10: home appliance
100: client device
200: home appliance control server
300: LLM server

## Claims

1. A method of providing personalized information using a large language model (LLM), the method comprising:
receiving, by a communication unit of a home appliance control device, a first question message from a client device or a first home appliance;
loading, by the control unit of the home appliance control device, preprocessing information corresponding to the first question message from a storage unit of the home appliance control device;
preprocessing, by the control unit, the first question message using the preprocessing information and generating a second question message;
transmitting, by the communication unit of the home appliance control device, the second question message to an LLM server and receiving a first answer message; and
transmitting, by the communication unit, any one of the first answer message or a second answer message obtained by postprocessing the first answer message to the client device or the first home appliance.

2. The method of claim 1, wherein the preprocessing information includes state information of one or more of the first home appliance or a second home appliance, or
the preprocessing information includes history information or identification information of one or more of the first home appliance, the second home appliance, or the client device;
wherein the second home appliance corresponds to the first question message.

3. The method of claim 1, further comprising, after the receiving of the first answer message,
loading, by the control unit, postprocessing information corresponding to the first answer message from the storage unit, postprocessing the first answer message, and generating the second answer message.

4. The method of claim 3, wherein the postprocessing information includes state information of one or more of the first home appliance or a second home appliance, or
the postprocessing information includes history information or identification information of one or more of the first home appliance, the second home appliance, or the client device;
wherein the second home appliance corresponds to the first a message.

5. The method of claim 1, wherein the first question message is a question message requesting a food recommendation or a cooking method recommendation, and
the preprocessing information includes information on objects stored in a refrigerator.

6. The method of claim 1, wherein the first question message is a question message requesting a food recommendation or a cooking method recommendation, and
the preprocessing information includes information on a preferred food from history information of the client device, or
the preprocessing information includes information on names, types, or manuals of one or more home appliances registered to the client device.

7. The method of claim 1, further comprising:
generating, by the control unit, a control command to control an operation of a second home appliance corresponding to one or more of the first question message, the second question message, the first answer message, or the second answer message; and
transmitting, by the control unit, the control command to the second home appliance or adding the control command to the second answer message.

8. The method of claim 1, wherein, when the first question message includes a name or identification information of the second home appliance,
the control unit loads customer response information corresponding to the name or the identification information as preprocessing information, or
the control unit loads the customer response information corresponding to the name or the identification information as postprocessing information corresponding to the first answer message.

9. The method of claim 1, further comprising:
when the first question message includes a name or identification information of the second home appliance, instructing, by the communication unit, the client device or the second home appliance to diagnose the second home appliance; and
when the communication unit receives a result of the diagnosis from the second home appliance or the client device, adding, by the control unit, the result of the diagnosis or guide information for resolving the result of the diagnosis to the second answer message.

10. A home appliance control server implementing the method of claims 1 to 9, comprising:
a communication unit configured to communicate with a client device, one or more home appliances, or a large language model (LLM) server;
a control unit configured to process information received by the communication unit; and
a storage unit configured to store information,
wherein, when the communication unit receives a first question message from the client device or a first home appliance,
the control unit loads preprocessing information corresponding to the first question message from the storage unit, preprocesses the first question message using the preprocessing information, and generates a second question message, and
the communication unit transmits the second question message to the LLM server, receives a first answer message, and
transmits any one of the first answer message or a second answer message obtained by postprocessing the first answer message to the client device or the first home appliance.

11. A method of providing personalized information using a large language model (LLM), the method comprising:
receiving, by a communication unit of a home appliance control device, a first question message from a client device or a first home appliance;
transmitting, by the communication unit, any one of the first question message or a second question message obtained by preprocessing the first question message to an LLM server and receiving a first answer message;
loading, by the control unit, postprocessing information corresponding to the first answer message from a storage unit of the home appliance control device;
postprocessing, by the control unit, the first answer message using the postprocessing information and generating a second answer message; and
transmitting, by the communication unit, the second answer message to the client device or the first home appliance.

12. The method of claim 11, wherein the postprocessing information includes state information of one or more of the first home appliance or a second home appliance, or
the postprocessing information includes history information or identification information of one or more of the first home appliance, the second home appliance, or the client device;
wherein the second home appliance corresponds to the first answer message.

13. The method of claim 11, further comprising, after the receiving of the first question message,
loading, by the control unit, preprocessing information corresponding to the first question message from the storage unit, preprocessing the first question message, and generating the second question message.

14. The method of claim 13, wherein the preprocessing information includes state information of one or more of the first home appliance or a second home appliance, or
the preprocessing information includes history information or identification information of one or more of the first home appliance, the second home appliance, or the client device;
wherein the second home appliance corresponds to the first question message.

15. The method of claim 11, wherein the first question message is a question message requesting a food recommendation or a cooking method recommendation, and
the postprocessing information includes information on objects stored in a refrigerator.

16. The method of claim 11, wherein the first question message is a question message requesting a food recommendation or a cooking method recommendation, and
the postprocessing information includes information on a preferred food from history information of the client device, or
the postprocessing information includes information on names, types, or manuals of one or more home appliances registered to the client device.

17. The method of claim 11, further comprising:
generating, by the control unit, a control command to control an operation of a second home appliance corresponding to one or more of the first question message, the second question message, the first answer message, or the second answer message; and
transmitting, by the control unit, the control command to the second home appliance or adding the control command to the second answer message.

18. The method of claim 11, further comprising:
when the first question message includes a name or identification information of the second home appliance,
the control unit loads customer response information corresponding to the name or the identification information as preprocessing information corresponding to the first question message, or
the control unit loads the customer response information corresponding to the name or the identification information as postprocessing information.

19. The method of claim 11, further comprising:
when the first question message includes a name or identification information of the second home appliance, instructing, by the communication unit, the client device or the second home appliance to diagnose the second home appliance; and
when the communication unit receives a result of the diagnosis from the second home appliance or the client device, adding, by the control unit, the result of the diagnosis or guide information for resolving the result of the diagnosis to the second answer message.

20. A home appliance control server implementing the method of claims 11 to 19, comprising:
a communication unit configured to communicate with a client device, one or more home appliances, or a large language model (LLM) server;
a control unit configured to process information received by the communication unit; and
a storage unit configured to store information,
wherein the communication unit receives a first question message from the client device or a first home appliance, transmits any one of the first question message or a second question message obtained by preprocessing the first question message to the LLM server, and receives a first answer message,
the control unit loads postprocessing information corresponding to the first answer message from the storage unit, postprocesses the first answer message using the postprocessing information, and generates a second answer message, and
the communication unit transmits the second answer message to the client device or the first home appliance.
